(19) Europäisches Patentamt / European Patent Office / Office européen des brevets

(11) **EP 3 370 537 B1**

(12) **EUROPEAN PATENT SPECIFICATION**

(45) Date of publication and mention of the grant of the patent:
**27.02.2019 Bulletin 2019/09**

(21) Application number: **16778830.6**

(22) Date of filing: **10.10.2016**

(51) Int Cl.:
*A23D 7/005* (2006.01)     *A23D 7/02* (2006.01)
*A23D 7/06* (2006.01)      *A23L 27/60* (2016.01)
*A23D 7/015* (2006.01)

(86) International application number:
**PCT/EP2016/074205**

(87) International publication number:
**WO 2017/076580 (11.05.2017 Gazette 2017/19)**

(54) **GAS-IN-OIL-IN-WATER EMULSION AND METHOD FOR ITS PREPARATION**

GAS-IN-ÖL-IN-WASSER-EMULSION UND VERFAHREN ZU DEREN HERSTELLUNG

ÉMULSION GAZ-HUILE-EAU ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2015 EP 15193359**

(43) Date of publication of application:
**12.09.2018 Bulletin 2018/37**

(73) Proprietors:
• **Unilever NV**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **BOT, Arjen**
**3133 AT Vlaardingen (NL)**
• **LUCIUS, Anita, Permatasari**
**3133 AT Vlaardingen (NL)**
• **WIERINGA, Jan, Alders**
**3133 AT Vlaardingen (NL)**

(74) Representative: **Fijnvandraat, Arnoldus**
**Unilever N.V.**
**Unilever Patent Group**
**Olivier van Noortlaan 120**
**3133 AT Vlaardingen (NL)**

(56) References cited:
EP-A1- 2 833 729        WO-A1-2006/035543
WO-A1-2013/174585       WO-A1-2015/036164
NL-A- 7 811 439

**Description**

**FIELD OF THE INVENTION**

The present invention relates to a gas-in-oil-in-water emulsion. The invention further relates to a method for preparation of the gas-in-oil-in-water emulsion.

**BACKGROUND TO THE INVENTION**

Food emulsions are widely known. For example margarine and butter are water-in-oil emulsions, and mayonnaise and salad dressings are oil-in-water emulsions. Also double emulsions are known, and usually these are oil-in-water-in-oil emulsions, or water-in-oil-in-water emulsions. Alternatively, double emulsions can be gas-in-oil-in-water emulsions (gases like air), or gas-in-water-in-oil emulsions. The advantage of a gas-in-oil-in-water emulsion is that part of the oil is replaced by gas bubbles, leading to a lighter product (less oil) with a structure and properties similar to regular oil-in-water emulsion. Consuming such product leads to reduction of calorie intake for the consumer, without compromising on the quality of the food product, as the gas bubbles are usually not observed. Moreover the product has a lower density than the non-aerated product, therefore it is cheaper to be transported from the production site to the consumer, and therewith energy can be saved, as less weight has to be transported per unit volume.

Various publications describe gas-in-oil-in-water emulsions. None of the following cited publications mention long term stability of such emulsions, e.g. days or weeks, which is required for successful application in food products.

M. Brun et al. (Food Research International, 2015, 67, 366-375) describe an oil foam and an air-in-oil-in-water emulsion, wherein the water phase contains hydrocolloids. Distilled mono and diglycerides of edible saturated fatty acids were used to disperse air bubbles in rapeseed oil, to an air volume fraction of about 55%. The air bubbles are protected against coalescence and Ostwald ripening by a dense layer of crystals, leading to a stable oil foam. The oil droplets were dispersed in a continuous aqueous phase using sodium caseinate or gum arabic as emulsifier, and as surfactant, at a volume fraction of aerated oil of about 5 vol.%. Images show that oil droplets are formed having a diameter ranging from about 40 to 400 micrometer. The oil droplets contain air bubbles having a size of about 10 to 20 micrometer, which are stabilized by a layer of mono- and diglycerides.

JP2008-168175A2 discloses a gas-in-oil-in-water emulsion, to prepare stable microbubbles. The aqueous phase contains SDS (sodium dodecyl sulphate) as an emulsifier. The oil phase is soybean oil or tetradecane.

Gas-in-oil-in-water emulsions are also disclosed by other scientific papers, e.g. Joye et al. (Journal of agricultural and food chemistry, 2014, 62, 2623-2630), Xu et al. (Lab Chip, 2012, 12, 2029-2036), Lu et al. (Lab Chip, 2013, 13, 3355-3359), and Corkidi et al. (Chemical engineering research and design, 2012, 90, 1727-1738).

Sucrose fatty acid esters are known for use in food products, and have been used in aeration of food products. They have been disclosed for aeration of aqueous phases, as well as oil phases.

WO 2012/130611 A1 discloses an edible oil-in-water emulsion containing sucrose fatty acid ester having HLB-value of more than 15. Gas bubbles are dispersed in the aqueous phase by whipping the emulsion.

WO 2008/110502 A1 discloses an aerated oil-in-water emulsion containing sucrose fatty acid ester, in particular sucrose stearate and sucrose palmitate. In these emulsions first the oil is dispersed in the aqueous phase, followed by aeration of the emulsion. This way the aqueous phase is aerated.

WO 2015/036164 A1 discloses edible fat continuous products comprising sucrose fatty acid ester having an HLB-value ranging from 2 to 7, and a particulate anti-spattering agent.

WO 2013/149816 A1 discloses a method for production of aerated water-in-oil emulsions. An aerated mixture of an oil and a sucrose fatty acid ester having an HLB value ranging from 1 to 7 is mixed with a water-in-oil emulsion. This leads to an oil-continuous with dispersed water droplets and gas bubbles.

WO 2013/174585 A1 discloses an aerated vegetable oil containing a sucrose fatty acid ester having an HLB value ranging from 1 to 7 and a hydrophobin. This oil is free from water. WO 2012/041629 A1, WO 2012/041630 A1, and WO 2012/041631 A1 disclose aerated chocolate compositions, comprising sucrose fatty acid ester having an HLB value of below 9. These chocolate compositions are free from water.

WO 2012/085077 A1 discloses a frozen confection product coated by an aerated fat-continuous coating that comprises a sucrose fatty acid ester with an HLB value of between 1 and 9. The coating is free from water.

WO 2006/035543 A1 relates to an oil-in-water type emulsion which tastes light.

NL7811439 relates to a method for preparation of a whipped emulsion, in particular an oil-in-water emulsion.

None of these references discloses the use of sucrose fatty acid esters to stabilise gas-in-oil-water emulsions.

**SUMMARY OF THE INVENTION**

Gas-in-oil-in-water emulsions are known, nevertheless the stability of such emulsions over prolonged periods of time (days, weeks), has not been shown. Additionally, prototypes have been shown which are rather low in dispersed oil phase. Hence it is an objective to provide gas-in-oil-in-water emulsions which are stable during a time period of days or weeks, and which contain a dispersed oil phase which is at a level that the emulsion can be used as a food product like a mayonnaise, salad dressing, or other types of oil-in-water emulsions.

We have now developed such a gas-in-oil-in-water emulsion by combining a mixture of sucrose fatty acid ester in water, with an aerated oil containing the same sucrose fatty acid ester. The aerated oil is dispersed in the aqueous phase, to a product containing oil droplets containing gas bubbles in a continuous aqueous phase. The gas-in-oil-in-water emulsion is stable against oil exudation, phase separation and phase inversion for at least two months.

Accordingly in a first aspect the invention provides a composition in the form of a gas-in-oil-in-water emulsion, comprising a dispersed phase of oil droplets in a continuous aqueous phase, wherein the oil droplets contain dispersed gas bubbles, and further comprising a sucrose fatty acid ester having an HLB-value ranging from 1 to 7, and wherein the volume fraction of oil droplets containing gas bubbles ranges from 5% to 75% by volume of the composition at standard conditions.

According to a second aspect of the invention, the present invention provides a method for preparation of a composition according to the first aspect of the invention, comprising the steps:

a) providing a mixture of water and sucrose fatty acid ester having an HLB-value ranging from 1 to 7 at a temperature of at least 60°C;
b) bringing the mixture from step a) to a temperature of less than 60°C, preferably less than 40°C;
c) providing an aerated mixture of an oil and a sucrose fatty acid ester having an HLB value ranging from 1 to 7; and
d) dispersing the mixture from step c) into the mixture from step b).

In a third aspect, the present invention provides use of a sucrose fatty acid ester having an HLB-value ranging from 1 to 7, to stabilise a composition in the form of a gas-in-oil-in-water emulsion, comprising a dispersed phase of oil droplets in a continuous aqueous phase, wherein the oil droplets contain dispersed gas bubbles, and wherein the volume fraction of oil droplets containing gas bubbles ranges from 5% to 75% by volume of the composition at standard conditions.

## DETAILED DESCRIPTION OF THE INVENTION

Percentages, unless otherwise stated, refer to the percentage by weight ('wt%').

In case a percentage refers to a volume percentage ('vol.%'), then this refers to the volume fraction at standard conditions.

**'Standard conditions'** are meant to be a temperature of 20°C and a pressure of 1 atmosphere (1.01325 bar).

The term **'aerated'** means that gas has been intentionally incorporated into a composition, for example by mechanical means. The gas can be any gas, but is preferably, in the context of food products, a food-grade gas such as air, nitrogen, nitrous oxide, or carbon dioxide. Most preferred the gas is air or nitrogen. Hence the term 'aeration' is not limited to aeration using air, and encompasses 'gasification' with other gases as well. The extent of aeration is generally measured in terms of 'overrun' (with unit '%'), which is defined as:

$$overrun = \frac{\text{volume of aerated product - volume of initial mix}}{\text{volume of initial mix}} \times 100\%$$

$$(1)$$

where the volumes refer to the volumes of aerated product and unaerated initial mix (from which the aerated product is made). Overrun is measured at atmospheric pressure.

The overrun of an aerated product and the volume fraction of gas in the aerated product generally relate in the following way:

$$volume\ fraction\ gas\ (in\ \%) = 100\%\ x\ [overrun\ /\ (100\%\ +\ overrun)] \qquad (2)$$

After formation, a foam will be vulnerable to coarsening by mechanisms such as creaming, Ostwald ripening and coalescence. By creaming, gas bubbles migrate under the influence of gravity to accumulate at the top of a product. Ostwald ripening or disproportionation refers to the growth of larger bubbles at the expense of smaller ones. Coalescence refers to merging of air bubbles by rupture of the film in between them.

A stable aerated product in the context of the present invention is defined as being stable for at least 30 minutes, more preferred at least an hour, more preferred at least a day, even more preferred at least a week, and most preferred at least a month, and most preferred several months. A stable foam can be defined to be stable with regard to total foam volume, and/or gas bubble size, and loses maximally 20% of its volume during 1 month storage. On the other hand systems may exist which loose more than 20% of their volume during 1 month storage, which nevertheless are considered to have a good stability, as the stability of such foams is much better than comparative foams that do not contain sucrose fatty acid esters. Foams of which the average bubble size strongly increases over time are regarded to be less stable than foams of which the average bubble size remains small over time.

**'Spoonable'** means that a composition is semi-solid but not free-flowing on a time scale typical for eating a meal, meaning not free-flowing within a time period of an hour. A sample of such substance is able to be dipped with a spoon from a container containing the composition.

**'Pourable'** is understood to mean that a composition is free-flowing; generally a spoon is not required to take a sample from a container containing a pourable composition.

**HLB value**

HLB values are a well-known classification of emulsifiers or mixtures of emulsifiers, based on the ratio of the hydrophilic and hydrophic portions of the emulsifiers.

The HLB value is given by the equation $HLB = 20*M_h/M$, where $M_h$ is the molecular mass of the hydrophilic part of the molecule and M is the molecular mass of the whole molecule thus giving a value on an arbitrary scale of 0 to 20. For fatty acid esters, $HLB = 20 (1-S/A)$ where

S = Saponification value
A = Acid number of the fatty acid

Therefore an HLB value of 0 corresponds to a completely hydrophobic molecule and an HLB value of 20 corresponds to a completely hydrophilic molecule. Typical HLB values are:

| | |
|---|---|
| 0 to 3 | an anti-foaming agent |
| 4 to 6 | a water-in-oil emulsifier |
| 7 to 9 | a wetting agent |
| 8 to 18 | an oil-in-water emulsifier |
| 13 to 15 | a detergent |
| 10 to 18 | a solubiliser or a hydrotrope |

**Sucrose fatty acid ester**

The definition of sucrose fatty acid ester in the present invention are compounds which are esters of sucrose and one or more fatty acids. Sucrose esters of fatty acids can be obtained by esterifying one or more of the hydroxyl group of a sucrose molecule with fatty acids, to form mono, di, tri or multi-fatty acid ester, or mixtures thereof. As sucrose has 8 hydroxyl groups, the maximum number of fatty acids that is esterified to one sucrose molecule is eight, to form sucrose octa fatty acid ester. A commercial sample of sucrose fatty acid esters may comprise a mixture of mono-, di-, tri-, and multi fatty acid esters. In a commercial sample the degree of esterification generally has a distribution, therefore it is usually expressed in terms of average degree of substitution (hereinafter also referred to simply as "degree of substitution").

Preferably the sucrose fatty acid ester comprises a mixed ester or homo-ester. Suitable fatty acids may vary both in alkyl chain length and in degree of unsaturation. Suitable fatty acids are saturated fatty acids including but not limited to capric acid, lauric acid, myristic acid, palmitic acid, stearic acid, arachic acid, behenic acid, lignoceric acid or cerotic acid. Likewise, monounsaturated fatty acids including but not limited to lauroleic acid, myristoleic acid, palmitoleic acid, oleic acid, gadoleic acid or erucic acid are also suitable. Similarly, polyunsaturated fatty acids including but not limited to linoleic acid, linolenic acid, elaeostearic acid, arachidonic acid or cervonic acid are suitable too. The fatty acid is preferably selected from the group consisting of lauric acid, myristic acid, palmitic acid, stearic acid and mixtures thereof. The fatty acid will also influence the melting temperature of the sucrose fatty acid ester, similarly as for triglycerides.

Sucrose fatty acid esters can also be mixtures of different compounds. In one way, mixtures of sucrose fatty acid esters may be mixtures in terms of compounds with a different degree of substitution. In a second way, mixtures of sucrose fatty acid esters may be mixtures of compounds with different types of fatty acids. Mixtures of sucrose fatty acid ester may also be mixtures according to the first and the second ways simultaneously. For example, a sucrose fatty acid ester mixture with both palmitic acid and stearic acid residues may for instance comprise sucrose monostearate, sucrose monopalmitate, sucrose distearate, sucrose dipalmitate, monopalmitoyl sucrose monostearate, dipalmitoyl sucrose monostearate, etcetera. For the purpose of this invention the term sucrose fatty acid ester is intended to include both single compounds and mixtures of single compounds according to the above two ways, unless specified otherwise.

Apart of their structure, sucrose fatty acid esters or mixtures may also be characterised by their properties. The most noteworthy property is their hydrophilic-lipophilic balance or HLB value. Sucrose esters are available with a wide range of HLB values which are controlled by the degree of esterification and the type of fatty acid used. All sucrose esters from commercial suppliers are a mixture of different fatty acids with different degrees of esterification. Sucrose fatty acid esters are approved in Europe and USA for use as food additive, and are known in Europe as E473 - sucrose esters of fatty acids.

*Composition of the invention*

In a first aspect the invention provides a composition in the form of a gas-in-oil-in-water emulsion, comprising a dispersed phase of oil droplets in a continuous aqueous phase, wherein the oil droplets contain dispersed gas bubbles, and further comprising a sucrose fatty acid ester having an HLB-value ranging from 1 to 7, and wherein the volume fraction of oil droplets containing gas bubbles ranges from 5% to 75% by volume of the composition at standard conditions.

Preferably the composition of the invention is an edible emulsion. Examples of emulsions encompassed by the present invention include mayonnaise, dressings, sauces, and creams. Preferably, the oil-in-water emulsion is a mayonnaise or a sauce, most preferably a mayonnaise. Generally such a mayonnaise is spoonable.

Mayonnaise is generally known as a thick, creamy sauce that can be used as a condiment with other foods. Mayonnaise is a stable water-continuous emulsion of vegetable oil, egg yolk and either vinegar or lemon juice. In many countries the term mayonnaise may only be used in case the emulsion conforms to the 'standard of identity', which defines the composition of a mayonnaise. For example, the standard of identity may define a minimum oil level, and a minimum egg yolk amount. Also mayonnaise-like products having oil levels lower than defined in a standard of identity can be considered to be mayonnaises. These kind of products often contain thickeners like starch to stabilise the aqueous phase. Mayonnaise may vary in colour, and is generally white, cream-coloured, or pale yellow. The texture may range from of light creamy to thick, and generally mayonnaise is spoonable. In the context of the present invention 'mayonnaise' includes emulsions with oil levels ranging from 5% to 85% by weight of the product. Mayonnaises in the context of the present invention do not necessarily need to conform to a standard of identity in any country.

The term 'oil' as used herein refers to lipids selected from triglycerides, diglycerides, monoglycerides and combinations thereof. Preferably the oil in the context of this invention comprises at least 90 wt% of triglycerides, more preferably at least 95 wt%. Preferably the oil contains less than 20 wt% of solid oil at 5°C, preferably less than 10 wt% solid oil. More preferred the oil is free from solid oil at 5°C. Most preferred the oil is liquid at 5°C. Preferred oils for use in the context of this invention are vegetable oils which are liquid at 5°C. Preferably the oil comprises sunflower oil, rapeseed oil, olive oil, soybean oil, and combinations of these oils.

Preferably the composition comprises sucrose fatty acid ester having an HLB-value ranging from 1 to 7 as the only isolated emulsifier. The phrase *'isolated emulsifier'* means that the composition contains only the sucrose fatty acid ester as emulsifier which has been added to the composition to act as an emulsifier. This does not exclude the possibility that the composition may contain emulsifiers which unintentionally are added to the composition as part of another ingredient. For example, the oil may contain minute amounts of monoglycerides or diglycerides which may act as emulsifiers. Such compounds are not included in the definition of the 'isolated emulsifier'.

Preferably the sucrose fatty acid ester has an HLB value ranging from 1 to 6, more preferably from 1 to 5, more preferably from 2 to 4. More preferred the sucrose fatty acid ester has an HLB value of 3. Preferably the concentration of sucrose fatty acid ester ranges from 2% to 25% by weight of the composition, preferably from 5% to 15% by weight. More preferred the concentration ranges from 5% to 12%, more preferred from 7% to 12% by weight of the composition. Preferably the sucrose fatty acid ester comprises one or more compounds chosen from the group consisting of sucrose tristearate, sucrose tetrastearate, sucrose pentastearate, sucrose tripalmitate, sucrose tetrapalmitate, and sucrose pentapalmitate. Preferably the sucrose fatty acid ester has an ester composition wherein the amount of mono-ester is maximally 40% of the total amount of ester, preferably maximally 30%, preferably maximally 20%.

Mitsubishi-Kagaku Foods Corporation (Tokyo, Japan) supplies the Ryoto sugar ester (food grade) range, containing amongst others sucrose laurate, sucrose stearate, sucrose palmitate, sucrose oleate, and sucrose behenate. Preferred sucrose fatty acid esters for use in the present invention are the sucrose stearates S370, S570, S770 (having HLB-values of 3, 5, and 7, respectively), and more preferred are S370, S570, and most preferred is S370. These sucrose stearates differ in their mono-ester content and consequently the HLB value of the mixture. Another supplier of suitable sucrose fatty acid esters is Sisterna BV (Roosendaal, The Netherlands).

The composition of the invention comprises oil droplets containing gas bubbles, and the volume fraction of oil droplets containing gas bubbles ranges from 5% to 75% by volume of the composition at standard conditions. Preferably, the volume fraction of oil droplets containing gas bubbles is maximally 60%, more preferred maximally 50% by volume of the composition, more preferred 40%, maximally 35% by volume of the composition. Preferably the volume fraction of oil droplets containing gas bubbles is at least 10%, more preferred at least 15% by volume of the composition (all ranges at standard conditions).

Preferably the volume fraction of gas dispersed in the oil droplets ranges from 2% to 75% by volume of the oil droplets at standard conditions. For the avoidance of doubt, the volume of the oil droplets includes the volume of gas bubbles in the oil droplets. More preferred the volume fraction of gas bubbles in the oil droplets ranges from 5% to 70%, more preferred from 10% to 60% of the volume of the oil droplets at standard conditions.

The gas dispersed in the oil droplets consequently leads to an aerated composition of the invention. Preferably the amount of gas in the oil droplets is such that the volume fraction of gas dispersed in the oil droplets ranges from 0.5% to 60% of the volume of the composition at standard conditions, preferably from 1% to 50% of the volume of the composition at standard conditions.

Preferably the composition of the invention comprises from 5% to 70% by weight of oil, preferably from 5% to 60% by weight of oil. Preferably the amount of oil is at least 7% by weight, preferably at least 10% by weight, preferably at least 15% by weight. Preferably the amount of oil is maximally 50% by weight, more preferred maximally 45% by weight, more preferred maximally 40% by weight, and most preferred maximally 35% by weight. Any combination of ranges using these mentioned end points are considered to be part of the invention as well.

The dispersed and aerated oil droplets have a size, such that preferably at least 90% of the number of oil droplets has a diameter of maximally 400 micrometer, preferably maximally 250 micrometer. Preferably at least 90% of the number of oil droplets has a diameter of maximally 200 micrometer. Preferably at least 95% of the number of oil droplets has a diameter of maximally 400 micrometer, preferably maximally 250 micrometer, preferably maximally 200 micrometer.

The oil droplets may contain one or more gas bubbles. Incidentally there may also be oil droplets which do not contain a gas bubbles. Preferably at least 90% of the number of gas bubbles has a diameter of maximally 150 micrometer, preferably maximally 100 micrometer. Preferably at least 90% of the number of gas bubbles has a diameter of maximally 60 micrometer. Preferably at least 95% of the number of gas bubbles has a diameter of maximally 150 micrometer, preferably maximally 100 micrometer, preferably maximally 60 micrometer.

In a preferred embodiment, the composition comprises the sucrose fatty acid ester as the only isolated emulsifier. In another embodiment, the composition may contain one or more other emulsifiers which are common in oil-in-water emulsion food products. For example, the composition of the invention may contain other ingredients which normally are present in a mayonnaise. Preferably the composition further comprises egg yolk, which is a source of phospholipids. The composition of the invention preferably also contains salt, e.g. kitchen salt (NaCl), and/or vinegar or another acid. An emulsion like a mayonnaise can be prepared with these ingredients. If present the concentration of salt preferably ranges from 0.1 to 2% by weight, more preferred from 0.2 to 1.5% by weight.

In case egg yolk is present, then preferably the concentration of egg yolk in the composition of the invention ranges from 1% to 8% by weight of the emulsion, more preferred from 2% to 6% by weight of the emulsion. The egg yolk may be added as egg yolk component, meaning largely without egg white. Alternatively, the composition may also contain whole egg, containing both egg white and egg yolk. The total amount of egg yolk in the composition of the invention includes egg yolk that may be present as part of whole egg. Preferably the concentration of phospholipids originating from egg yolk ranges from 0.05% to 1% by weight, preferably from 0.1% to 0.8% by weight of the emulsion.

The egg yolk may be used native, or part of the egg yolk in the composition of the invention may have been subjected to an enzymatic conversion process using phospholipase. Preferably the phospholipase that is used to treat egg yolk is phospholipase A2. A suitable source of enzyme modified egg yolk is 'Heat stabilised egg yolk (92-8)', supplied by Bouwhuis Enthoven (Raalte, the Netherlands). This sample contains 92% enzyme modified egg yolk and 8% table salt.

In case egg yolk treated with phospholipase is used in the composition of the invention, then preferably at least 20% by weight of the egg yolk has been modified by treatment with a phospholipase, preferably with phospholipase A2. Preferably maximally 90% by weight of the egg yolk has been modified by treatment with phospholipase, preferably with phospholipase A2. Preferably the concentration of egg yolk which has been modified by treatment with phospholipase, preferably with phospholipase A2, ranges from 0.5% to 4% by weight of the composition, preferably from 1% to 4% by weight of the composition. Preferably the total concentration of 1-lysophosphatidylcholine and 2-lysophosphatidylcholine ranges from 0.02% to 0.2% by weight of the emulsion. These are the phospholipids whose concentration is increased due to the enzymatic conversion process.

In case the composition contains acid, then preferably the composition has a pH ranging from 3 to 5. Acid that is preferably used in the composition of the invention to provide the preferred acidity are regular acids typically used in food emulsions. Preferably the composition comprises from 0.1% to 10% by weight of acid, preferably from 0.1% to 5% by weight of acid, preferably from 0.1% to 2% by weight of acid. The acid preferably is selected from acetic acid, citric acid, lactic acid, phosphoric acid, and combinations thereof. Acetic acid may be added as a component of vinegar, and citric acid may be added as a component of lemon juice. Preferably, the amount of acid is such that the pH ranges from 3 to 4.6. Preferably the composition contains at least 0.2% by weight of undissociated acetic acid. This way a natural preservation system is created to improve storage time of the composition.

Optional ingredients like spices, vegetable pieces, mustard, sugars (in particular mono- and/or disaccharides), vitamins, flavours, colourants, preservatives, antioxidants, chelators, herbs and vegetable pieces may be present in the composition of the invention. Such optional additives, when used, collectively preferably do not make up more than 40%, more preferably not more than 20% by weight of the emulsion.

Although not required, the composition of the invention may contain one or more polymeric or oligomeric water structurants to stabilise the continuous water phase and to thicken the emulsion. Examples of such structurants are water-soluble polysaccharides like native starches, chemically or physically modified starches, carrageenan, locust bean gum, carboxymethyl cellulose, pectin, xanthan gum, agar, and alginate. Examples of water-insoluble structurants are cellulosic fibres like citrus fibres and tomato fibres. Preferably the concentration of polymeric or oligomeric water structurants is maximally 4% by weight of the composition, more preferred maximally 3%, more preferred maximally 2%, and more preferred maximally 1% by weight of the emulsion. Most preferred polymeric or oligomeric water structurants are absent from the composition of the invention.

The composition of the invention typically is spoonable as opposed to solid or pourable. The firmness of the composition can be characterised by the Stevens value of the composition, which determines the hardness of the composition, preferably measured after storage for 1 week. Preferably the emulsion has a Stevens value at 20°C of at least 50 gram. Preferably the emulsion has a Stevens value at 20°C of at least 70 gram, preferably at least 80 gram, preferably at least 100 gram, preferably ranging from 100 to 200 gram. More preferably the emulsion has a Stevens value at 20°C ranging from 100 to 150 gram. The Stevens value is determined as defined in the experimental section.

The dynamic viscosity of the composition of the invention preferably is at least 500 Pa.s at $0.1\ s^{-1}$, more preferred at least 1,000 Pa.s at $0.1\ s^{-1}$, more preferred at least 1,500 Pa.s at $0.1\ s^{-1}$. Preferably the dynamic viscosity is maximally 15,000 Pa.s at $0.1\ s^{-1}$, more preferred maximally 12,000 Pa.s at $0.1\ s^{-1}$, more preferred maximally 10,000 Pa.s at $0.1\ s^{-1}$, more preferred maximally 10,000 Pa.s at $0.1\ s^{-1}$.

The dynamic viscosity of the composition of the invention preferably is at least 0.15 Pa.s at $500\ s^{-1}$, more preferred at least 0.2 Pa.s at $500\ s^{-1}$, more preferred at least 0.25 Pa.s at $500\ s^{-1}$. Preferably the dynamic viscosity is maximally 1.2 Pa.s at $500\ s^{-1}$, more preferred maximally 1.0 Pa.s at $500\ s^{-1}$, more preferred maximally 0.8 Pa.s at $500\ s^{-1}$.

These ranges of viscosities are at a temperature of 25°C.

*Method of the invention*

In a second aspect, the present invention provides a method for preparation of a composition according to the first aspect of the invention, comprising the steps:

a) providing a mixture of water and sucrose fatty acid ester having an HLB-value ranging from 1 to 7 at a temperature of at least 60°C;
b) bringing the mixture from step a) to a temperature of less than 60°C, preferably less than 40°C;
c) providing an aerated mixture of an oil and a sucrose fatty acid ester having an HLB value ranging from 1 to 7; and
d) dispersing the mixture from step c) into the mixture from step b).

Without being bound by theory, in steps a) and b) the conditions are chosen such that the sucrose fatty acid ester forms a lamellar phase in the aqueous phase. A mesomorphic phase is formed similar as in WO 92/09209. In step a) the temperature is chosen such that the sucrose fatty acid ester is above its Krafft temperature. Subsequently in step b) the temperature is brought below the Krafft temperature, so that the sucrose fatty acid ester form a lamellar or mesomorphic phase. The cooling ensures that the lamellar or mesomorphic phase is retained in subsequent steps of the process.

Preferably in step a) the temperature ranges from 60 to 100°C, more preferred from 65 to 100°C, more preferred from 80 to 95°C. Preferably the mixture is at a temperature of at least 60°C during a period of at least 10 minutes. Preferably the indicated temperature is retained during a time period ranging from 10 minutes up to 12 hours, more preferred from 10 minutes to 5 hours.

Preferably the sucrose fatty acid ester added in steps a) and b) is the same sucrose fatty acid ester. Preferably the sucrose fatty acid ester added in steps a) and b) is the only isolated emulsifier added in the method in order to prepare the composition of the invention.

Preferably in step a) the concentration of sucrose fatty acid ester in water ranges from 5% to 10% by weight. Preferably the mixture in step a) has a dynamic viscosity ranging from 5 to 1,000 Pa.s at $0.1\ s^{-1}$, preferably from 100 to 300 Pa.s at $0.1\ s^{-1}$. The dynamic viscosity preferably ranges from 0.015 to 15 Pa.s at $500\ s^{-1}$, preferably from 0.1 to 0.3 Pa.s at $500\ s^{-1}$. Preferably at a shear rate of $100\ s^{-1}$ the dynamic viscosity is at least 0.4 Pa.s, and preferably maximally 2 Pa.s. These ranges of viscosities are at a temperature of 25°C.

Optional ingredients like spices, vegetable pieces, mustard, sugars (in particular mono- and/or disaccharides), vitamins, flavours, colourants, preservatives, antioxidants, chelators, herbs, vegetable pieces and polymeric or oligomeric water structurants may be added to the mixture in step a). In case the sucrose fatty acid ester is not the only isolated emulsifier in the composition of the invention, then preferably egg yolk is added to the aqueous phase in step a).

Preferably in step b) the mixture from step a) is brought to a temperature ranging from 20°C to less than 60°C, preferably to a temperature ranging from 20°C to 40°C. Preferably the mixture is kept within this temperature range during a period of at least 1 minute, more preferred during a period of at least 5 minutes, more preferred during a period of at least 10 minutes. Preferably the mixture is kept within this temperature range during a period of at most 1 hour. Preferably in step b) the mixture is stirred in order to obtain a homogeneous mixture.

An aerated mixture of oil and sucrose fatty acid ester is prepared in step c). Preferably the mixture in step c) is prepared by mixing oil and sucrose fatty acid ester at a temperature of at least 60°C and aerated by introducing gas into the mixture at a temperature ranging from 60°C to 95°C. At this temperature the sucrose fatty acid ester melts and easily can be mixed with the liquid oil. In case the oil is not liquid at ambient temperature, then the mixing of the sucrose fatty acid ester and the oil can be done at such temperature that the oil becomes liquid. The temperature at which the oil and sucrose fatty acid ester melt are dependent on the specific oil and sucrose fatty acid ester, and is can be determined by the skilled person. Preferably the oil and sucrose fatty acid ester are mixed at a temperature ranging from 60°C to 90°C, preferably from 65°C to 85°C, more preferred from 65°C to 80°C. The temperature at which the aeration is done preferably ranges from 60°C to 90°C, preferably from 65°C to 85°C, more preferred from 65°C to 80°C.

Preferably in step c) the concentration of sucrose fatty acid ester ranges from 5% to 25% by weight of the mixture of step c), preferably from 8% to 20% by weight, preferably from 10% to 15% by weight of the mixture of step c). In case the concentration of sucrose fatty acid ester in the oil phase is too low, then the gas bubbles which are dispersed within the oil droplets, may cream within the oil droplets.

Preferably the aeration of the oil is done under shear, in order to ensure that the gas bubbles are small enough and finely dispersed in the oil. Preferably the shear is created by mixing the oil and the gas when being aerated. Aeration of the oil in step c) may be done by any method commonly known for aeration, such as an Aerolatte, Kenwood mixer, or a Silverson mixer, which are generally batch mixers. Additionally, aeration may also be done in line, using a continuous process, such as an Oakes mixer, a Mondomixer, or a pin stirrer (like a C-unit) with nitrogen or other gas inlet.

Preferably the volume of gas dispersed in the oil constitutes 5% to 75 vol.% of the volume of the oil at standard conditions. Preferably, the volume fraction of gas in the oil is maximally 60%, more preferred maximally 50% by volume, more preferred 40%, maximally 35% by volume of the composition. Preferably the volume fraction of gas is at least 10%, more preferred at least 15% by volume of the oil (all ranges at standard conditions). Consequently, preferably the oil has an overrun ranging from 5.3% to 300%.

Preferably the mixture in step c) is subsequently cooled to a temperature below 60°C, preferably below 40°C. This way the structure of the aerated oil will be retained, before it is being mixed into the continuous aqueous phase. Preferably the aerated oil mixture from step c) constitutes from 5% to 75% of the volume of the composition prepared in step d) at standard conditions, preferably from 5% to 70% of the volume, preferably from 10% to 60% of the volume.

Preferably in step d) the mixture from step c) is added to the mixture from step b) under shear, in order to disperse the gas-in-oil phase in the continuous aqueous phase.

Subsequently, after preparing the basic gas-in-oil-in-water emulsion in step d), further ingredients may be added to the composition. Therefore preferably the method of the invention further comprises the step:

e) adding further ingredients to the composition from step d), preferably at a temperature below 40°C, preferably below 30°C, preferably below 25°C.

The result of the method of the invention, is that a gas-in-oil-in-water emulsion is prepared that is stable against oil exudation, phase separation and phase inversion for at least two months.

*Use of the sucrose fatty acid ester*

In a third aspect, the present invention provides use of a sucrose fatty acid ester having an HLB-value ranging from 1 to 7, to stabilise a composition in the form of a gas-in-oil-in-water emulsion, comprising a dispersed phase of oil droplets in a continuous aqueous phase, wherein the oil droplets contain dispersed gas bubbles, and wherein the volume fraction of oil droplets containing gas bubbles ranges from 5% to 75% by volume of the composition at standard conditions. Preferably the sucrose fatty acid ester having an HLB-value ranging from 1 to 7 is the only isolated emulsifier.

Alternatively the third aspect of the invention provides a method for using a sucrose fatty acid ester having an HLB-value ranging from 1 to 7, in a composition in the form of a gas-in-oil-in-water emulsion, comprising a dispersed phase of oil droplets in a continuous aqueous phase, wherein the oil droplets contain dispersed gas bubbles, and wherein the volume fraction of oil droplets containing gas bubbles ranges from 5% to 75% by volume of the composition at standard conditions. Preferably the sucrose fatty acid ester having an HLB-value ranging from 1 to 7 is the only isolated emulsifier.

Alternatively the third aspect of the invention provides use of a sucrose fatty acid ester having an HLB-value ranging from 1 to 7, as an emulsifier in a composition in the form of a gas-in-oil-in-water emulsion, comprising a dispersed phase of oil droplets in a continuous aqueous phase, wherein the oil droplets contain dispersed gas bubbles, and wherein the volume fraction of oil droplets containing gas bubbles ranges from 5% to 75% by volume of the composition at standard conditions. Preferably the sucrose fatty acid ester having an HLB-value ranging from 1 to 7 is the only isolated emulsifier.

**DESCRIPTION OF FIGURES**

*Figure 1*: Picture of grid used for determining the Stevens value of gas-in-oil-in-water emulsions as used herein.
*Figure 2*: Two CSLM images of G/O/W-emulsion, sample I from example 2; image size 400x400 μm. The light coloured irregular shaped items are oil droplets, containing gas bubbles (dark coloured, spherical shape). The oil droplets are dispersed in a continuous aqueous phase (dark coloured).

**EXAMPLES**

The following non-limiting examples describe the invention.

**Example 1: Materials, Methods, Aerated Oil, Aqueous Phases**

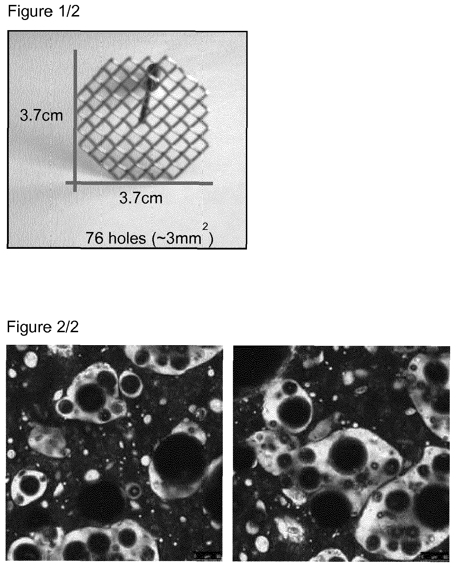

Sunflower oil (SF) ex Cargill (The Netherlands).
Sucrose ester of mixed fatty acids Ryoto S370 ex Mitsubishi-Kagaku Foods Corporation (Tokyo, Japan). This sucrose fatty acid ester has an HLB of about 3, and contains about 20% mono-ester, and about 80% di-, tri- and polyester.
Spirit vinegar (12% acetic acid) ex Mizkan (UK).
Heat-stabilized egg yolk (containing 8% NaCl) ex Bouwhuis Enthoven BV (Raalte, the Netherlands). This is egg yolk which is treated with phospholipase A2.
Sugar (sucrose) ex Danisco (Denmark).
Kitchen salt (NaCl) ex Akzo Nobel (The Netherlands).
*Conductivity measurements:* are used to determine whether prepared G/O/W-emulsions are water continuous. The equipment used is a portable conductivity meter HI 9835 from Hanna Instruments Inc. (USA). If the electrical conductivity is less than 0.01 mS/cm, the product can be considered to be oil-continuous for all practical purposes. As the aqueous phase contains salt, the conductivity can easily be measured.
*Firmness - Stevens value:* the Stevens value is determined at 20°C by using a Stevens LFRA Texture Analyser (ex Brookfield Viscometers Ltd., UK) with a maximum load/measuring range of 1000 grams, and applying a penetration test of 20 mm using a grid, at 2 mm per second penetration rate, with a response weight of 5 g, in a cup having a diameter of 65 mm, that contains the emulsion. The grid has 76 square openings of approximately 3x3 mm, is made from stainless steel wire with a thickness of approximately 1 mm, and has a diameter of 40 mm. One end of a shaft is connected to the probe of the texture analyser, while the other end is connected to the middle of the grid. The grid is positioned on the flat upper surface of the emulsion in the cup. Upon starting the penetration test, the grid is slowly pushed downward into the emulsion by the texture analyser. The final force exerted on the probe is recorded and translated into the Stevens value in gram. A photograph of the grid is given in Figure 1.
Firmness measurements are done 1 hour after production of the emulsion at room temperature, and after storage of the emulsion for 8 weeks at the temperature as indicated in the tables below.
*Syneresis:* Syneresis in an oil-in-water emulsion is the expelling of aqueous liquid, which separates from the product during storage after disrupting the structure by e.g. spooning. In this test gravimetric drip of expelled water from an oil-in-water emulsion into an acrylic cylinder is determined during a storage period at various climate conditions.
Materials: Acrylic cylinder (length 45 mm, inner diameter 21 mm, wall thickness 2 mm, open at two ends) and qualitative filter paper, type 415, diameter 75mm (ex VWR, Amsterdam, Netherlands). The filter is applied at one end of the cylinder and attached to the outside cylinder wall by adhesive tape. The tube with filter is vertically inserted into an emulsion sample of 225 mL in a jar, until the top of the cylinder is at level with the emulsion surface. The jar is closed with a lid, and stored at 5°C or 20°C. The amount of liquid in the tube after storage is determined by taking out the liquid from the tube (which has passed through the filter into the tube) with a pipette, and weighing the amount of liquid (in gram) after a determined amount of time. The lower the syneresis value, the better for the stability of the emulsion. Usually measurements are done in duplicate.
*Dynamic viscosity:* A flow curve for each sample was made using an Advanced Rheometer AR 2000 (TA Instruments, Great Britain). A smooth, 60mm diameter stainless steel probe, having a plate-plate geometry with a 1 mm gap was used to obtain viscosity at different shear rates, ranging from 1,000 s$^{-1}$ to 0.1 s$^{-1}$ at 25°C. The viscosity of the emulsions was determined 1 hour after preparation, using a 'shear rate sweep' from high to low shear.

*Preparation of Aerated oil*

Mixtures of S370 emulsifier in sunflower oil (SF) were made, at a concentration of 10% by weight. The blends were kept in aluminium cans overnight in temperature-controlled oven set at 95°C to ensure that the emulsifier had completely melted, followed by two hours equilibration at 70°C. Subsequently the mixture was aerated by whipping with Kenwood mixer for 4 minutes at maximum speed (relatively high shear). The air content achieved was 74 vol.% (overrun 285%) at standard conditions.

*Preparation of Aqueous Phases*

Four different aqueous phases were prepared, as described in the table below. Ingredients were added to a stirred vessel in the order in which they occur in the table (from top to bottom).

*Table 1 Composition of aqueous phase used to prepare gas-in-oil-in-water emulsions.*

|  | AP1 0% S370 with EY [wt%] | AP2 5% S370 with EY [wt%] | AP3 10% S370 with EY [wt%] | AP4 5% S370 no EY [wt%] |
|---|---|---|---|---|
| demineralised water | 78 | 73 | 68 | 77 |
| sugar | 4 | 4 | 4 | 5 |
| S370 | 0 | 5 | 10 | 5 |
| heat-stabilized egg yolk | 5 | 5 | 5 | 0 |
| vinegar | 10 | 10 | 10 | 10 |
| salt | 3 | 3 | 3 | 3 |

S370 was gradually added into the sugar solution in water, while stirring and heated in the water bath until there were no more clumps observed. During cooling in 40°C water bath, this mixture was stirred every 5 min to prevent the formation of large clumps or crystals of S370.

## Example 2: Production of G/O/W-emulsions without Egg Yolk

Gas-in-oil-in-water (G/O/W) emulsions containing various level of aerated oil were prepared. Freshly whipped aerated oil from example 1 (at a temperature of about 40-50°C) was immediately transferred to a Hobart mixer bowl (N50 5-Quart Mixer, Hobart), which already contained the aqueous phase AP4 from example 1 at room temperature. The volume fraction air in the oil was 74 vol.% (overrun 285%). The emulsion was prepared in the Hobart mixer at speed 2 during 1 to 3 minutes (relatively low shear). Hereafter, the mixture was carefully transferred into storage containers with a metal spoon to minimize damage to its structure, and stored at 5°C.

*Table 2 Composition (in wt%) of gas-in-oil-in-water emulsions without egg yolk.*

|  | F | G | H | I | J |
|---|---|---|---|---|---|
| water | 38.5 | 46.2 | 53.9 | 61.6 | 69.3 |
| sugar | 2.5 | 3.0 | 3.5 | 4.0 | 4.5 |
| S370 in aqueous phase | 2.5 | 3.0 | 3.5 | 4.0 | 4.5 |
| vinegar | 5.0 | 6.0 | 7.0 | 8.0 | 9.0 |
| salt | 1.5 | 1.8 | 2.1 | 2.4 | 2.7 |
| sunflower oil | 45.0 | 36.0 | 27.0 | 18.0 | 9.0 |
| S370 in oil phase | 5.0 | 4.0 | 3.0 | 2.0 | 1.0 |

The properties of these products are given in the next table.

*Table 3 Properties of emulsions from Table 2.*

|  | F | G | H | I | J |
|---|---|---|---|---|---|
| Volume fraction aqueous phase [vol.%] | 21% | 28% | 38% | 51% | 70% |
| Volume fraction dispersed phase (gas-in-oil) [vol.%] | 79% | 72% | 62% | 49% | 30% |
| Volume fraction gas in emulsion [vol.%] | 58% | 53% | 46% | 36% | 22% |
| Volume fraction oil in emulsion (excl. gas) [vol.%] | 21% | 19% | 16% | 13% | 8% |
| Electrical conductivity [mS/cm] | 0.00 | 0.15 | 0.00 | 8.81 | 10.02 |
| Overrun of G/O/W emulsion [%] | 36 | 42 | 40 | 28 | 22 |

These results show that it is possible to disperse up to at least 50 vol.% oil phase in the aqueous phase containing sucrose fatty acid ester, wherein the oil phase contains gas bubbles at an average gas volume fraction of 74%. The conductivity measurements show that the sample with less than 62% dispersed phase (gas-in-oil) are water-continuous. As an illustrative example, Figure 2 shows confocal microscopy pictures of the sample 'I'.

**Example 3: Preparation of G/O/W-emulsions with Egg Yolk**

Similarly as in example 2, gas-in-oil-in-water (G/O/W) emulsions containing various levels of aerated oil and stabilized egg yolk were prepared. Freshly whipped aerated oil from example 1 was immediately transferred to a Hobart mixer bowl (N50 5-Quart Mixer, Hobart), which already contained either aqueous phase AP1, AP2, or AP3 from example 1. The volume fraction air in the oil was 74 vol.% (overrun 285%). The emulsion was prepared in a Hobart mixer at speed 2 during 1 to 3 minutes (relatively low shear). Hereafter, the mixture was carefully transferred into storage containers with a metal spoon to minimize damage to its structure, and stored at 5°C or 25°C. After storage during a specified time period, syneresis, and firmness were determined. The viscosity and conductivity were measured about 1 hour after preparation of the emulsion.

*Table 4, Table 7*, and *Table 10* show the recipes of gas-in-oil-in-water emulsions that were prepared and in which the oil content, sucrose fatty acid ester content in aqueous phase, and egg yolk content have been varied in a consistent way. These 3 tables form one set of experiments.

*Table 4 Recipe (in wt%) of gas-in-oil-in-water emulsions with egg yolk.*

|  | 1 | 2 | 3 | 4 | 5 | 6 | 7 | 8 |
|---|---|---|---|---|---|---|---|---|
| water | 61.2 | 47.6 | 58.4 | 70.2 | 70.2 | 47.6 | 47.6 | 65.7 |
| sugar | 3.6 | 2.8 | 3.2 | 3.6 | 3.6 | 2.8 | 2.8 | 3.6 |
| S370 in aqueous phase | 9 | 7 | 4 | 0 | 0 | 7 | 7 | 4.5 |
| stabilized egg yolk | 4.5 | 3.5 | 4 | 4.5 | 4.5 | 3.5 | 3.5 | 4.5 |
| vinegar | 9 | 7 | 8 | 9 | 9 | 7 | 7 | 9 |
| salt | 2.7 | 2.1 | 2.4 | 2.7 | 2.7 | 2.1 | 2.1 | 2.7 |
| sunflower oil | 9 | 27 | 18 | 9 | 9 | 27 | 27 | 9 |
| S370 in oil phase | 1 | 3 | 2 | 1 | 1 | 3 | 3 | 1 |

*Table 5 Properties of gas-in-oil-in-water emulsions from Table 4.*

|  | 1 | 2 | 3 | 4 | 5 | 6 | 7 | 8 |
|---|---|---|---|---|---|---|---|---|
| Aqueous phase used [-] | AP3 | AP3 | AP2 | AP1 | AP1 | AP3 | AP3 | AP2 |
| Volume fraction aqueous phase [vol.%] | 58 | 52 | 47 | 80 | 83 | 47 | 41 | 64 |
| Volume fraction dispersed phase (gas-in-oil) [vol.%] | 42 | 48 | 53 | 20 | 17 | 53 | 59 | 36 |

(continued)

|  | 1 | 2 | 3 | 4 | 5 | 6 | 7 | 8 |
|---|---|---|---|---|---|---|---|---|
| Volume fraction gas in emulsion [vol.%] | 35 | 25 | 41 | 11 | 8.1 | 33 | 41 | 29 |
| Volume fraction oil in emulsion (excl. gas) [vol.%] | 6.5 | 22 | 12 | 8.9 | 9.2 | 20 | 18 | 7.1 |
| Overrun of emulsion [%] | 55 | 34 | 71 | 13 | 8.8 | 50 | 71 | 40 |

Table 6 Analytical properties of gas-in-oil-in-water emulsions from Table 4.

|  | 1 | 2 | 3 | 4 | 5 | 6 | 7 | 8 |
|---|---|---|---|---|---|---|---|---|
| Storage temp. [°C] | 25 | 25 | 25 | 25 | 5 | 25 | 5 | 5 |
| Syneresis 1 day [%] | 0.0 | 0.7 | 0.0 | 66.7 | 66.7 | 0.0 | 0.0 | 0.7 |
| Syneresis 4 wks [%] | 7.3 | 14.7 | 16.7 | 75.3 | 66.7 | 8.7 | 7.3 | 5.3 |
| Syneresis 8 wks [%] | 8.0 | 18.0 | 36.7 | 69.3 | 66.7 | 10.0 | 8.7 | 5.3 |
| Firmness 1 h [g] | 50.0 | 37.4 | 17.3 | 5.9 | 3.2 | 50.8 | 19.6 | 36.8 |
| Firmness 8 wks [g] | 156.8 | 143 | 172.2 | 24.6 | 8.8 | 173.2 | 113.6 | 141.8 |
| Electrical conductivity [mS/cm] | 0.38 | 0.28 | 0.32 | 0.03 | 0 | 0.27 | 0.24 | 0.25 |
| Viscosity @ $0.1s^{-1}$ [Pa.s] | 3214 | 10490 | 623 | 295 | 329 | 13540 | 5099 | 9779 |
| Viscosity @ $500s^{-1}$ [Pa.s] | 0.61 | 0.54 | 0.39 | 0.04 | 0.02 | 0.89 | 0.48 | 0.76 |

Table 7 Recipe (in wt%) of gas-in-oil-in-water emulsions with egg yolk.

|  | 9 | 10 | 11 | 12 | 13 | 14 | 15 | 16 |
|---|---|---|---|---|---|---|---|---|
| water | 70.2 | 62.4 | 51.1 | 58.9 | 54.6 | 61.2 | 61.2 | 58.4 |
| sugar | 3.6 | 3.2 | 2.8 | 3.2 | 2.8 | 3.6 | 3.6 | 3.2 |
| S370 in aqueous phase | 0 | 0 | 3.5 | 3.5 | 0 | 9 | 9 | 4 |
| stabilized egg yolk | 4.5 | 4 | 3.5 | 4 | 3.5 | 4.5 | 4.5 | 4 |
| vinegar | 9 | 8 | 7 | 8 | 7 | 9 | 9 | 8 |
| salt | 2.7 | 2.4 | 2.1 | 2.4 | 2.1 | 2.7 | 2.7 | 2.4 |
| sunflower oil | 9 | 18 | 27 | 18 | 27 | 9 | 9 | 18 |
| S370 in oil phase | 1 | 2 | 3 | 2 | 3 | 1 | 1 | 2 |

Table 8 Properties of gas-in-oil-in-water emulsions from Table 7.

|  | 9 | 10 | 11 | 12 | 13 | 14 | 15 | 16 |
|---|---|---|---|---|---|---|---|---|
| Aqueous phase used [-] | AP1 | AP1 | AP2 | AP2 | AP1 | AP3 | AP3 | AP2 |
| Volume fraction aqueous phase [vol.%] | 81 | 65 | 40 | 49 | 56 | 56 | 58 | 48 |
| Volume fraction dispersed phase (gas-in-oil) [vol.%] | 19 | 35 | 60 | 51 | 44 | 44 | 42 | 52 |
| Volume fraction gas in emulsion [vol.%] | 10 | 19 | 43 | 39 | 20 | 38 | 36 | 40 |
| Volume fraction oil in emulsion (excl. gas) [vol.%] | 9.0 | 16 | 17 | 12 | 24 | 6.2 | 6.5 | 12 |
| Overrun of emulsion [%] | 12 | 24 | 75 | 65 | 25 | 62 | 55 | 67 |

*Table 9 Analytical properties of gas-in-oil-in-water emulsions from Table 7.*

|  | **9** | **10** | **11** | **12** | **13** | **14** | **15** | **16** |
|---|---|---|---|---|---|---|---|---|
| Storage temp. [°C] | 25 | 5 | 5 | 25 | 25 | 25 | 5 | 25 |
| Syneresis 1 day [%] | 66.7 | 36.7 | 0.0 | 0.0 | 13.3 | 0.0 | 0.0 | 0.0 |
| Syneresis 4 wks [%] | 73.3 | 38.7 | 7.3 | 17.3 | 66.7 | 13.3 | 6.0 | 18.0 |
| Syneresis 8 wks [%] | 73.3 | 32.0 | 8.0 | 20.0 | 66.7 | 15.3 | 6.7 | 38.0 |
| Firmness 1 h [g] | 6.2 | 32.4 | 27.2 | 26.4 | 41.4 | 40.2 | 37.2 | 20.4 |
| Firmness 8 wks [g] | 40.6 | 120.4 | 121.7 | 203.2 | 207.8 | 191 | 170.5 | 217.3 |
| Electrical conductivity [mS/cm] | 0 | 0 | 0.18 | 0.22 | 0.11 | 0.25 | 0.34 | 0.38 |
| Viscosity @ $0.1s^{-1}$ [Pa.s] | 440 | 6269 | 303 | 1853 | 175 | 4221 | 4035 | 1625 |
| Viscosity @ $500s^{-1}$ [Pa.s] | 0.43 | 0.40 | 0.04 | 0.42 | 0.06 | 0.64 | 0.60 | 0.47 |

*Table 10 Recipe (in wt%) of gas-in-oil-in-water emulsions with egg yolk.*

|  | **17** | **18** | **19** | **20** | **21** | **22** | **23** | **24** |
|---|---|---|---|---|---|---|---|---|
| water | 58.4 | 54.6 | 54.6 | 54.6 | 54.4 | 58.4 | 65.7 | 54.4 |
| sugar | 3.2 | 2.8 | 2.8 | 2.8 | 3.2 | 3.2 | 3.6 | 3.2 |
| S370 in aqueous phase | 4 | 0 | 0 | 0 | 8 | 4 | 4.5 | 8 |
| stabilized egg yolk | 4 | 3.5 | 3.5 | 3.5 | 4 | 4 | 4.5 | 4 |
| vinegar | 8 | 7 | 7 | 7 | 8 | 8 | 9 | 8 |
| salt | 2.4 | 2.1 | 2.1 | 2.1 | 2.4 | 2.4 | 2.7 | 2.4 |
| sunflower oil | 18 | 27 | 27 | 27 | 18 | 18 | 9 | 18 |
| S370 in oil phase | 2 | 3 | 3 | 3 | 2 | 2 | 1 | 2 |

*Table 11 Properties of gas-in-oil-in-water emulsions from Table 10.*

|  | **17** | **18** | **19** | **20** | **21** | **22** | **23** | **24** |
|---|---|---|---|---|---|---|---|---|
| Aqueous phase used [-] | AP2 | AP1 | AP1 | AP1 | AP3 | AP2 | AP2 | AP3 |
| Volume fraction aqueous phase [vol.%] | 56 | 61 | 66 | 57 | 59 | 58 | 61 | 62 |
| Volume fraction dispersed phase (gas-in-oil) [vol.%] | 44 | 39 | 34 | 43 | 41 | 42 | 39 | 38 |
| Volume fraction gas in emulsion [vol.%] | 30 | 13 | 6.3 | 19 | 27 | 27 | 33 | 22 |
| Volume fraction oil in emulsion (excl. gas) [vol.%] | 14 | 26 | 28 | 24 | 15 | 15 | 6.7 | 16 |
| Overrun of emulsion [%] | 43 | 15 | 6.7 | 23 | 36 | 37 | 48 | 28 |

*Table 12 Properties of gas-in-oil-in-water emulsions from Table 10.*

|  | **17** | **18** | **19** | **20** | **21** | **22** | **23** | **24** |
|---|---|---|---|---|---|---|---|---|
| Storage temp. [°C] | 25 | 5 | 5 | 25 | 5 | 5 | 5 | 5 |
| Syneresis 1 day [%] | 6.7 | 53.3 | 48.0 | 66.7 | 0.7 | 2.0 | 3.3 | 0.7 |
| Syneresis 4 wks [%] | 24.0 | 56.7 | 66.7 | 66.7 | 7.3 | 14.0 | 14.7 | 6.7 |
| Syneresis 8 wks [%] | 24.0 | 58.0 | 66.7 | 66.7 | 8.0 | 14.7 | 18.0 | 8.0 |

(continued)

|  | 17 | 18 | 19 | 20 | 21 | 22 | 23 | 24 |
|---|---|---|---|---|---|---|---|---|
| Firmness 1 h [g] | 16.0 | 20.0 | 10.0 | 49.0 | 28.8 | 9.2 | 4.8 | 43.2 |
| Firmness 8 wks [g] | 44.4 | 45.6 | 29.8 | 36.2 | 106.8 | 56.4 | 39 | 116.2 |
| Electrical conductivity [mS/cm] | 0.29 | 0.03 | 0.06 | 0.12 | 0.3 | 0.35 | 0.61 | 0.47 |
| Viscosity @ $0.1s^{-1}$ [Pa.s] | 4310 | 150 | 117 | 285 | 3673 | 1220 | 80 | 5140 |
| Viscosity @ $500s^{-1}$ [Pa.s] | 0.20 | 0.02 | 0.09 | 0.09 | 0.43 | 0.16 | 0.12 | 0.49 |

The compositions containing aqueous phase AP1 (emulsions 4, 5, 9, 10, 13, 18, 19, 20) did not yield satisfactory results. These samples have a high syneresis, low viscosity, and low firmness. The presence of the sucrose fatty acid ester is required to disperse the aerated oil phase.

The emulsions prepared with aqueous phases AP2 and AP3 (5% or 10% sucrose fatty acid ester in the aqueous phase) show that gas-in-oil-in water emulsions containing up to at least 60 vol.% dispersed phase (gas-in-oil) could successfully be prepared. The presence of egg yolk helps to be able to disperse higher amounts of oil as compared to emulsions without egg yolk in example 2. The emulsions containing 10% sucrose fatty acid ester in the aqueous phase are more stable than the emulsions containing 5% sucrose fatty acid ester in the aqueous phase, as shown by lower syneresis values.

The storage temperature (5 or 25°C) did not have a large influence on the structure of the emulsions. For example emulsions 14 and 15 have the same composition and are stored at 5 and 25°C respectively. The firmness of these two samples does not differ dramatically. Syneresis is improved when stored at 5°C.

## Claims

1. A composition in the form of a gas-in-oil-in-water emulsion, comprising a dispersed phase of oil droplets in a continuous aqueous phase, wherein the oil droplets contain dispersed gas bubbles, and further comprising a sucrose fatty acid ester having an HLB-value ranging from 1 to 7, and wherein the volume fraction of oil droplets containing gas bubbles ranges from 5% to 75% by volume of the composition at standard conditions.

2. A composition according to claim 1, wherein the composition comprises sucrose fatty acid ester having an HLB-value ranging from 1 to 7 as the only isolated emulsifier.

3. A composition according to claim 1 or 2, wherein the concentration of sucrose fatty acid ester ranges from 2% to 25% by weight of the composition, preferably from 5% to 15% by weight.

4. A composition according to any of claims 1 to 3, wherein the volume fraction of oil droplets containing gas bubbles ranges from 5% to 60% by volume of the composition at standard conditions.

5. A composition according to any of claims 1 to 4, wherein the volume fraction of gas dispersed in the oil droplets ranges from 2% to 75% by volume of the oil droplets at standard conditions.

6. A composition according to any of claims 1 to 5, wherein the volume fraction of gas dispersed in the oil droplets ranges from 0.5% to 60% of the volume of the composition at standard conditions, preferably from 1% to 50% of the volume of the composition at standard conditions.

7. A composition according to any of claims 1 to 6, wherein at least 90% of the number of oil droplets has a diameter of maximally 400 micrometer, preferably maximally 250 micrometer.

8. A composition according to any of claims 1 to 7, at least 90% of the number of gas bubbles has a diameter of maximally 150 micrometer, preferably maximally 100 micrometer.

9. A method for preparation of a composition according to any of claims 1 to 8, comprising the steps:

   a) providing a mixture of water and sucrose fatty acid ester having an HLB-value ranging from 1 to 7 at a temperature of at least 60°C;

b) bringing the mixture from step a) to a temperature of less than 60°C, preferably less than 40°C;

c) providing an aerated mixture of an oil and a sucrose fatty acid ester having an HLB value ranging from 1 to 7; and

d) dispersing the mixture from step c) into the mixture from step b).

10. A method according to claim 9, wherein in step a) the concentration of sucrose fatty acid ester in water ranges from 5% to 10% by weight.

11. A method according to claim 9 or 10, wherein the mixture in step c) is prepared by mixing oil and sucrose fatty acid ester at a temperature of at least 60°C and aerated by introducing gas into the mixture at a temperature ranging from 60°C to 95°C.

12. A method according to claim 11, wherein the mixture in step c) is subsequently cooled to a temperature below 60°C, preferably below 40°C.

13. A method according to any of claims 9 to 12, wherein in step d) the mixture from step c) is added to the mixture from step b) under shear, in order to disperse the gas-in-oil phase in the continuous aqueous phase.

14. A method according to any of claims 9 to 13, further comprising the step:

e) adding further ingredients to the composition from step d), preferably at a temperature below 40°C, preferably below 30°C, preferably below 25°C.

15. Use of a sucrose fatty acid ester having an HLB-value ranging from 1 to 7, to stabilise a composition in the form of a gas-in-oil-in-water emulsion, comprising a dispersed phase of oil droplets in a continuous aqueous phase, wherein the oil droplets contain dispersed gas bubbles, and wherein the volume fraction of oil droplets containing gas bubbles ranges from 5% to 75% by volume of the composition at standard conditions.

**Patentansprüche**

1. Zusammensetzung in Form einer Gas-in-Öl-in-Wasser-Emulsion, umfassend eine dispergierte Phase von Öltröpfchen in einer kontinuierlichen wässrigen Phase, wobei die Öltröpfchen dispergierte Gasblasen enthalten, und ferner umfassend einen Sucrosefettsäureester mit einem HLB-Wert, der von 1 bis 7 reicht, und wobei der Volumenanteil der Öltröpfchen, die die Gasblasen enthalten, bei Standardbedingungen von 5 Volumen-% bis 75 Volumen-% der Zusammensetzung reicht.

2. Zusammensetzung nach Anspruch 1, wobei die Zusammensetzung Sucrosefettsäureester mit einem HLB-Wert, der von 1 bis 7 reicht, als einzigen isolierten Emulgator umfasst.

3. Zusammensetzung nach Anspruch 1 oder 2, wobei die Konzentration des Sucrosefettsäureesters von 2 Gewichts-% bis 25 Gewichts-% der Zusammensetzung, vorzugsweise von 5 Gewichts-% bis 15 Gewichts-%, reicht.

4. Zusammensetzung nach irgendeinem der Ansprüche 1 bis 3, wobei der Volumenanteil der Öltröpfchen, die Gasblasen enthalten, bei Standardbedingungen von 5 Volumen-% bis 60 Volumen-% der Zusammensetzung reicht.

5. Zusammensetzung nach irgendeinem der Ansprüche 1 bis 4, wobei der Volumenanteil des in den Öltröpfchen dispergierten Gases bei Standardbedingungen von 2 Volumen-% bis 75 Volumen-% der Öltröpfchen reicht.

6. Zusammensetzung nach irgendeinem der Ansprüche 1 bis 5, wobei der Volumenanteil des in den Gaströpfchen dispergierten Gases bei Standardbedingungen von 0,5 Volumen-% bis 60 Volumen-% der Zusammensetzung reicht, vorzugsweise bei Standardbedingungen von 1 Volumen-% bis 50 Volumen-% der Zusammensetzung.

7. Zusammensetzung nach irgendeinem der Ansprüche 1 bis 6, wobei mindestens 90% der Zahl der Öltröpfchen einen Durchmesser von maximal 400 Mikrometern, vorzugsweise maximal 250 Mikrometern, aufweist.

8. Zusammensetzung nach irgendeinem der Ansprüche 1 bis 7, wobei mindestens 90% der Zahl der Gasblasen einen Durchmesser von maximal 150 Mikrometern, vorzugsweise maximal 100 Mikrometern, aufweist.

9. Verfahren zur Herstellung einer Zusammensetzung nach irgendeinem der Ansprüche 1 bis 8, umfassend die Schritte:

a) Bereitstellen einer Mischung von Wasser und Sucrosefettsäureester mit einem HLB-Wert, der bei einer Temperatur von mindestens 60°C von 1 bis 7 reicht,
b) die Mischung von Schritt a) wird auf eine Temperatur von weniger als 60°C, vorzugsweise weniger als 40°C, gebracht,
c) Bereitstellen einer belüfteten Mischung eines Öls und eines Sucrosefettsäureesters mit einem HLB-Wert, der von 1 bis 7 reicht, und
d) Dispergieren der Mischung von Schritt c) in die Mischung von Schritt b).

10. Verfahren nach Anspruch 9, wobei in Schritt a) die Konzentration des Sucrosefettsäureesters in Wasser von 5 Gewichts-% bis 10 Gewichts-% reicht.

11. Verfahren nach Anspruch 9 oder 10, wobei die Mischung im Schritt c) durch Mischen von Öl und Sucrosefettsäureester bei einer Temperatur von mindestens 60°C hergestellt und durch Einführen von Gas in die Mischung bei einer Temperatur, die von 60°C bis 95°C reicht, belüftet wird.

12. Verfahren nach Anspruch 11, wobei die Mischung im Schritt c) nachfolgend auf eine Temperatur unter 60°C, vorzugsweise unter 40°C, gekühlt wird.

13. Verfahren nach irgendeinem der Ansprüche 9 bis 12, wobei im Schritt d) die Mischung von Schritt c) unter Scherung zu der Mischung von Schritt b) gegeben wird, um die Gas-in-Öl-Phase in der kontinuierlichen wässrigen Phase zu dispergieren.

14. Verfahren nach irgendeinem der Ansprüche 9 bis 13, ferner umfassend den Schritt:

e) Zugeben weiterer Bestandteile zu der Mischung von Schritt d), vorzugsweise bei einer Temperatur unter 40°C, vorzugsweise unter 30°C, bevorzugt unter 25°C.

15. Verwendung eines Sucrosefettsäureesters mit einem HLB-Wert, der von 1 bis 7 reicht, um eine Zusammensetzung in Form einer Gas-in-Öl-in-Wasser-Emulsion zu stabilisieren, umfassend eine dispergierte Phase von Öltröpfchen in einer kontinuierlichen wässrigen Phase, wobei die Öltröpfchen dispergierte Gasblasen enthalten, und wobei der Volumenanteil der Öltröpfchen, die die Gasblasen enthalten, bei Standardbedingungen von 5 Volumen-% bis 75 Volumen-% der Zusammensetzung reicht.

**Revendications**

1. Composition dans la forme d'une émulsion gaz-dans-huile-dans-eau, comprenant une phase dispersée de gouttelettes d'huile dans une phase aqueuse continue, dans laquelle les gouttelettes d'huile contiennent des bulles de gaz dispersées, et comprenant de plus un ester d'acide gras de saccharose ayant une valeur HLB de 1 à 7, et dans laquelle la fraction de volume de gouttelettes d'huile de bulles de gaz contenant des gouttelettes d'huile est de 5 % à 75 % en volume de la composition dans des conditions standard.

2. Composition selon la revendication 1, dans laquelle la composition comprend un ester d'acide gras de saccharose ayant une valeur HLB de 1 à 7 comme l'émulsionnant uniquement isolé.

3. Composition selon la revendication 1 ou 2, dans laquelle la concentration d'ester d'acide gras de saccharose est de 2 % à 25 % en masse de la composition, de préférence de 5 % à 15 % en masse.

4. Composition selon l'une quelconque des revendications 1 à 3, dans laquelle la fraction de volume de bulles de gaz contenant des gouttelettes d'huile est de 5 % à 60 % en volume de la composition dans des conditions standard.

5. Composition selon l'une quelconque des revendications 1 à 4, dans laquelle la fraction de volume de gaz dispersé dans les gouttelettes d'huile est de 2 % à 75 % en volume des gouttelettes d'huile dans des conditions standard.

6. Composition selon l'une quelconque des revendications 1 à 5, dans laquelle la fraction de volume de gaz dispersé dans les gouttelettes d'huile est de 0,5 % à 60 % du volume de la composition dans des conditions standard, de préférence de 1 % à 50 % du volume de la composition dans des conditions standard.

7. Composition selon l'une quelconque des revendications 1 à 6, dans laquelle au moins 90 % du nombre de gouttelettes d'huile présentent un diamètre maximal de 400 micromètres, de préférence maximal de 250 micromètres.

8. Composition selon l'une quelconque des revendications 1 à 7, au moins 90 % du nombre de bulles de gaz présentent un diamètre maximal de 150 micromètres, de préférence maximal de 100 micromètres.

9. Procédé de préparation d'une composition selon l'une quelconque des revendications 1 à 8, comprenant les étapes :

   a) de fourniture d'un mélange d'eau et d'ester d'acide gras de saccharose ayant une valeur HLB de 1 à 7 à une température d'au moins 60°C ;
   b) de mettre le mélange de l'étape a) à une température inférieure à 60°C, de préférence inférieure à 40°C ;
   c) de fourniture d'un mélange aéré d'une huile et d'un ester d'acide gras de saccharose ayant une valeur HLB de 1 à 7 ; et
   d) de dispersion du mélange de l'étape c) dans le mélange de l'étape b).

10. Procédé selon la revendication 9, dans lequel dans l'étape a) la concentration d'ester d'acide gras de saccharose dans l'eau est de 5 % à 10 % en masse.

11. Procédé selon la revendication 9 ou 10, dans lequel le mélange dans l'étape c) est préparé en mélangeant de l'huile et un ester d'acide gras de saccharose à une température d'au moins 60°C et aéré par introduction de gaz dans le mélange à une température de 60°C à 95°C.

12. Procédé selon la revendication 11, dans lequel le mélange dans l'étape c) est ensuite refroidi à une température inférieure à 60°C, de préférence inférieure à 40°C.

13. Procédé selon l'une quelconque des revendications 9 à 12, dans lequel dans l'étape d) le mélange de l'étape c) est ajouté au mélange de l'étape b) sous cisaillement, afin de disperser la phase gaz-dans-huile dans la phase aqueuse continue.

14. Procédé selon l'une quelconque des revendications 9 à 13, comprenant de plus l'étape :

   e) d'addition d'autres ingrédients à la composition de l'étape d), de préférence à une température inférieure à 40°C, de préférence inférieure à 30°C, de préférence inférieure à 25°C.

15. Utilisation d'un ester d'acide gras de saccharose ayant une valeur HLB de 1 à 7, pour stabiliser une composition dans la forme d'une émulsion gaz-dans-huile-dans-eau, comprenant une phase dispersée de gouttelettes d'huile dans une phase aqueuse continue, dans laquelle les gouttelettes d'huile contiennent des bulles de gaz dispersées, et dans laquelle la fraction de volume de gouttelettes d'huile contenant des bulles de gaz est de 5 % à 75 % en volume de la composition dans des conditions standard.

Figure 1/2

Figure 2/2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008168175 A
- WO 2012130611 A1
- WO 2008110502 A1
- WO 2015036164 A1
- WO 2013149816 A1
- WO 2013174585 A1
- WO 2012041629 A1
- WO 2012041630 A1
- WO 2012041631 A1
- WO 2012085077 A1
- WO 2006035543 A1
- NL 7811439
- WO 9209209 A

**Non-patent literature cited in the description**

- **M. BRUN et al.** *Food Research International,* 2015, vol. 67, 366-375
- **JOYE et al.** *Journal of agricultural and food chemistry,* 2014, vol. 62, 2623-2630
- **XU et al.** *Lab Chip,* 2012, vol. 12, 2029-2036
- **LU et al.** *Lab Chip,* 2013, vol. 13, 3355-3359
- **CORKIDI et al.** *Chemical engineering research and design,* 2012, vol. 90, 1727-1738